# EUROPÄISCHE PATENTANMELDUNG

(11) **EP 0 613 803 A1**
(43) Veröffentlichungstag der Anmeldung: **07.09.1994**
(21) Anmeldenummer: 94102461.4
(22) Anmeldetag: 18.02.1994
(51) Int. Cl.: B60N 3/00, B60R 7/04

(54) **Ablage für das Fahrerhaus eines Nutzkraftwagens**

(30) Priorität: 04.03.1993 DE 4306706
(71) Anmelder: MERCEDES-BENZ AG, D-70327 Stuttgart (DE)
(72) Erfinder: Edgar, Pieper, Dipl., D-71032 Böblingen (DE)

(57) **Zusammenfassung**

2.1 Beim Stand der Technik ist im Bereich der Mittelkonsole ein Ablagetisch vorgesehen, der mittels einer Schwenkeinrichtung höhenverlagerbar ist und sich in einer Funktionsposition auf einem Armaturenbrett des Fahrerhauses abstützt.

2.2 Gemäß der Erfindung ist die Auflageplatte auf einem Hub-Schwenkzylinder angeordnet, der an einer Unterseite der Auflageplatte zu ihrem Flächenmittelpunkt exzentrisch angreift und dessen Hub- und Schwenkachse etwa lotrecht zur Auflageplatte ausgerichtet ist.

2.3 Verwendung bei Lastkraftwagen.

## Beschreibung

Die Erfindung betrifft ein Fahrerhaus für einen Nutzkraftwagen mit einer zwischen einem Fahrersitz und einem Beifahrersitz angeordneten horizontalen Auflageplatte, die zwischen einer versenkten Ruheposition und einer angehobenen Funktionsposition höhenverlagerbar ist.

Für ein Fahrerhaus eines Nutzkraftwagens ist es bekannt (DE 37 11 001 A1), eine Tischplatte zwischen Fahrer- und Beifahrersitz auf einer Mittelkonsole des Fahrerhauses anzuordnen. Aus dieser Ruheposition ist der Ablagetisch mittels einer Schwenkeinrichtung in eine Funktionsposition höhenverlagerbar, in der er sich nach vorne auf dem Armaturenbrett abstützt. In dieser Position ist der Tisch arretierbar.

Aufgabe der Erfindung ist es, ein Fahrerhaus der eingangs genannten Art zu schaffen, bei dem die Auflageplatte einen verbesserten Komfort für Fahrer und Beifahrer ermöglicht.

Diese Aufgabe wird dadurch gelöst, daß die Auflageplatte auf einem Hub-Schwenkzylinder angeordnet ist, der an einer Unterseite der Auflageplatte zu ihrem Flächenmittelpunkt exzentrisch angreift und dessen Hub- und Schwenkachse etwa lotrecht zur Auflageplatte ausgerichtet ist. Dadurch ist für die Höhenverlagerung der Auflageplatte kein zusätzlicher Schwenkraum notwendig, da die Auflageplatte lotrecht nach oben höhenverlagert wird. Zudem entfällt eine zusätzliche Aufstützfläche für die Auflageplatte, da diese allein durch den Hub-Schwenkzylinder gehalten wird. Durch das exzentrische Angreifen des Hub-Schwenkzylinders kann dieser in einer horizontalen Ebene entweder zum Fahrer oder zum Beifahrer verschwenkt werden. Es ist auch möglich, die Auflageplatte zu einer hinter Fahrer- und Beifahrersitz angeordneten Liege zu verschwenken.

In Ausgestaltung der Erfindung weist der Hub-Schwenkzylinder Mittel zum Arretieren der Auflageplatte in ihrer Ruheposition sowie einen Endanschlag für die Funktionsposition auf. Die Funktionsposition stellt dabei die Position dar, in der die Auflageplatte beispielsweise als Tisch oder als Auflage für Kommunikationseinheiten wie Telefon, Fahrtenschreiber oder Drucker für Kontrollgeräte dient. Durch diese Maßnahme ist die Auflageplatte in ihrer Ruheposition auf der Mittelkonsole sowie auch in der jeweiligen Funktionsposition arretierbar.

In weiterer Ausgestaltung der Erfindung ist als Hub-Schwenkzylinder eine in einem Standrohr gelagerte Druckfeder vorgesehen. Als Druckfeder dient beispielsweise eine Spiral- oder Gasdruckfeder. Durch diese Ausbildung des Hub-Schwenkzylinders wird in einfacher Weise die Hub- und die Schwenkposition verwirklicht, ohne zusätzliche Energiequellen zu benötigen. Das Absenken der Auflageplatte erfolgt bei dieser Ausführung gegen die Federkraft der Druckfeder. Selbstverständlich sind die Arretierungsmittel so ausgelegt, daß sie eine sichere Fixierung gegen die Druckkraft der Druckfeder bieten.

In weiterer Ausgestaltung der Erfindung ist die Funktionsposition auf Höhe einer hinter Fahrer- und Beifahrersitz angeordneten Liege vorgesehen. Durch diese Ausgestaltung ist die Auflageplatte sowohl aus der Fahrer-, als auch aus der Beifahrer- sowie aus der Liegenposition gut zugänglich.

In weiterer Ausgestaltung der Erfindung sind auf der Auflageplatte Komfortelemente für Fahrer oder Beifahrer vorgesehen.

Als Komfortelemente dienen beispielsweise Ablage- oder Abstellflächen in Form von entsprechend angepaßten Vertiefungen oder Ausformungen.

Weitere Vorteile und Merkmale der Erfindung ergeben sich aus den Unteransprüchen sowie aus der nachfolgenden Beschreibung eines Ausführungsbeispiels der Erfindung, das anhand der Zeichnungen dargestellt ist.
- Fig. 1: zeigt eine perspektivische Darstellung einer zwischen einem Fahrer- und einem Beifahrersitz angeordneten Mittelkonsole eines Fahrerhauses, die rückseitig von einer Liege flankiert ist,
- Fig. 2: eine perspektivische Darstellung einer Mittelkonsole nach Fig. 1, bei der eine Auflageplatte aus ihrer horizontalen Ruheposition höhenverlagert und zur Mitte hin verschwenkt ist,
- Fig. 3: eine weitere perspektivische Darstellung der Mittelkonsole nach den Fig. 1 und 2, jedoch von der gegenüberliegenden Seite, bei der die Auflageplatte zum Fahrersitz hin verschwenkt ist,
- Fig. 4: eine weitere perspektivische Darstellung der Position der Auflageplatte nach Fig. 3, aus der ersichtlich ist, daß die Auflageplatte in etwa auf Höhe der Liege angeordnet ist, und
- Fig. 5: einen Ausschnitt der Auflageplatte nach Fig. 4, bei der im Bereich einer Ecke ein drehbar gelagerter Rasthaken vorgesehen ist.

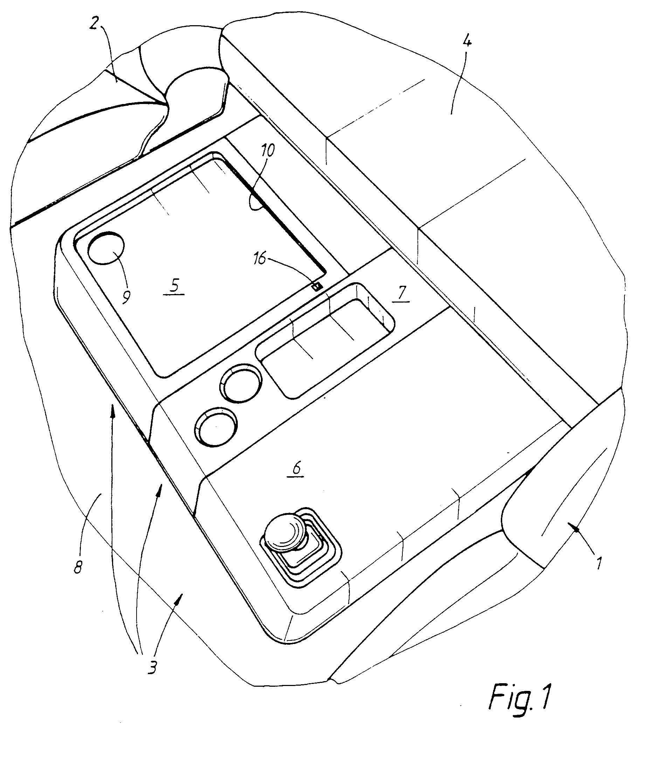

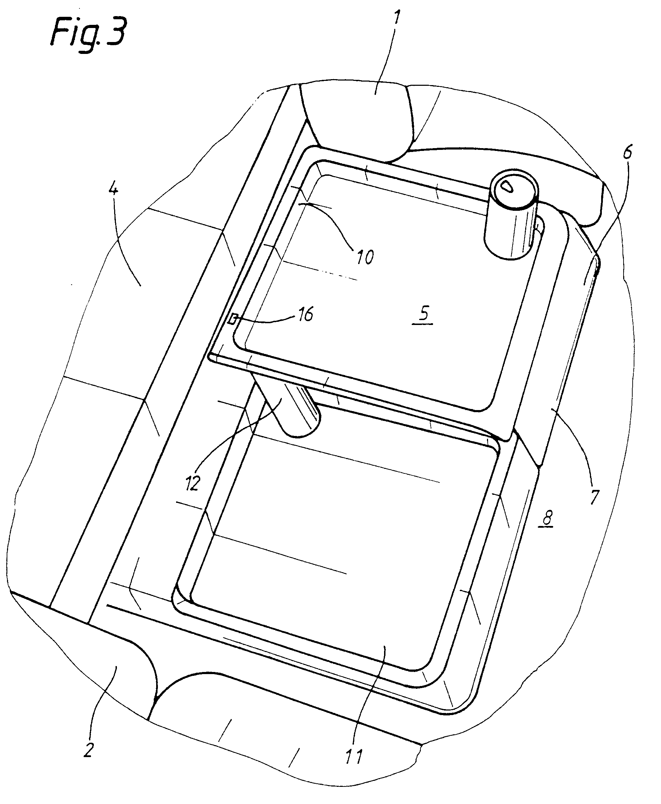

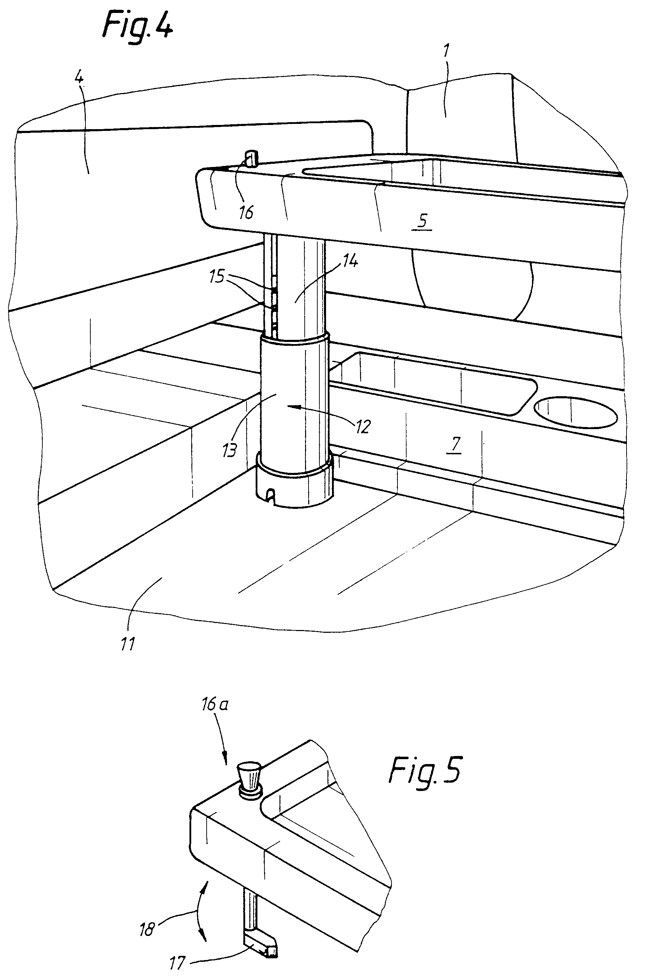

Ein Fahrerhaus für einen Lastkraftwagen weist nach Fig. 1 in seinem Innenraum einen Fahrersitz (1) und einen Beifahrersitz (2) auf. Zwischen dem Fahrersitz (1) und dem Beifahrersitz (2) ist eine Mittelkonsole (3) vorgesehen, an die zur Rückseite hin eine Liegenanordnung (4) anschließt. Die Liegenanordnung (4) ist somit hinter dem Fahrersitz (1) und dem Beifahrersitz (2) vorgesehen. Die Mittelkonsole (3) besteht aus einem Funktionsmodul (6) sowie aus einem Komfortmodul (7), wobei im Funktionsmodul (6) Schalthebel und Bremse und im Komfortmodul (7) Ablage- und Abstellfächer vorgesehen sind. Neben dem Komfortmodul (7) ist auf der Mittelkonsole (3) eine Auflageplatte (5) angeordnet, die in ihrer dargestellten Ruheposition auf einer Unterlage (11) (Fig. 3 und 4) der Mittelkonsole (3) aufliegt. Die Auflageplatte (5) ist horizontal und somit etwa parallel zu einem Fahrzeugboden (8) angeordnet. Auf der Auflageplatte (5) sind Komfortelemente in Form einer Vertiefung (9) und eines Randes (10) vorgesehen. Die Vertiefung (9) dient zum Abstellen eines Glases, einer Flasche oder ähnlichem, der Rand (10) begrenzt die Oberseite der Auflageplatte (5) im Bereich ihrer Kanten und verhindert somit ein Herunterfallen von auf der Auflageplatte (5) befindlichen Gegenständen.

Die Auflageplatte (5) ist auf einem Teleskoprohr (12) befestigt, wobei das Teleskoprohr (12) exzentrisch zum Flächenmittelpunkt der Auflageplatte (5) im Bereich einer Ecke der Auflageplatte (5) angreift. Das Teleskoprohr (12) ist an der Unterseite der Auflageplatte (5) beispielsweise durch Verschrauben starr befestigt. Das Teleskoprohr (12) ist lotrecht zur Unterlage (11) angeordnet und weist ein feststehendes Standrohr (13) auf, das starr mit der Unterlage (11) der Mittelkonsole (3) verbunden ist. In dem Standrohr (13) ist ein Federrohr (14) längsverschiebbar und drehbeweglich gelagert. Die Auflageplatte (5) ist an dem Federrohr (14) des Teleskoprohres (12) fixiert. Dadurch ist die Auflageplatte (5) sowohl höhenverlagerbar als auch drehbeweglich durch das Teleskoprohr (12) gehalten. In dem Teleskoprohr (12) ist eine Spiralfeder (15) gelagert, die sich einerseits am Boden des Standrohres (13) und andererseits im Bereich einer Deckelfläche des Federrohres (14) abstützt. Die Spiralfeder (15) ist eine Druckfeder. Das Federrohr (14) weist einen Endanschlag auf, der die obere Endposition des Federrohres (14) relativ zum Standrohr (13) darstellt. Die Druckfeder (15) drückt daher das Federrohr (14) so weit nach oben, bis der Endanschlag des Federrohres (14) an einem entsprechenden Endanschlag des Standrohres (13) anschlägt. Diese Postion stellt die Funktionsposition der Auflageplatte (5) dar. Zum gleichmäßigen Anheben der Auflageplatte (5) ist bei einer nicht dargestellten Ausführung zusätzlich zur Druckfeder (15) ein Dämpfer im Teleskoprohr angeordnet.

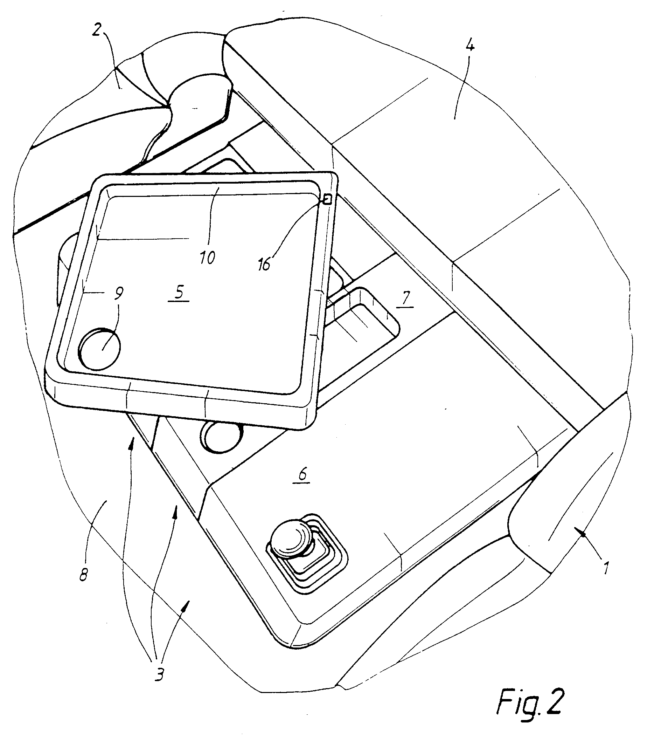

In ihrer Ruheposition ist die Auflageplatte (5) durch eine Arretiervorrichtung an der Mittelkonsole (3) mechanisch fixiert. Bei der Ausführung nach den Fig. 1 bis 4 ist dazu in der Auflageplatte (5) ein Rasthaken (nicht dargestellt) vorgesehen, der in der Ruheposition in eine korrespondierende Rastöffnung der Mittelkonsole (3) eingreift. Dieser Rasthaken ist durch einen mechanischen Taster (16) entriegelbar.

Die Auflageplatte (5) wird somit aus ihrer in Fig. 1 dargestellten Ruheposition in einfacher Weise dadurch angehoben und verschwenkt, daß zunächst die Arretierungsvorrichtung durch ein Drücken des Tasters (16) entriegelt wird. Dadurch wird automatisch die Auflageplatte (5) durch die Druckfeder (15) bis in ihre Funktionsposition nach oben gedrückt. Nun kann die Auflageplatte (5) in beliebiger Weise von Hand in die entsprechende Position zum Fahrer, zum Beifahrer oder zur Liegenanordnung (4) verschwenkt werden. Um die Auflageplatte (5) aus dieser Funktionsposition wieder in ihre Ruheposition zu bringen, wird die Auflageplatte (5) soweit über die Unterlage (11) geschwenkt, bis sie in vertikaler Richtung mit dieser fluchtet. Dann wird die Auflageplatte (5) von Hand gegen die Druckkraft der Druckfeder (15) nach unten gedrückt. Um ein Verbiegen der Auflageplatte (5) oder ein Verkanten des Teleskoprohres (12) zu vermeiden, ist es zweckmäßig, den von Hand ausgeübten Druck etwa auf Höhe des Teleskoprohres (12) auf die Auflageplatte (5) aufzubringen. Sobald die Auflageplatte (5) beim Herunterdrücken ihre Ruheposition erreicht hat, rastet der federbeaufschlagte Rasthaken automatisch in die Rastöffnung an der Mittelkonsole (3) ein. Dadurch ist die Auflageplatte (5) in dieser Position arretiert. Der Rasthaken ist an der Auflageplatte (5) im Bereich der Ecke angeordnet, in dem auch das Teleskoprohr (12) angreift. Dadurch wirkt die Arretierung des Rasthakens in unmittelbarer Nähe des Angriffspunktes der Druckfeder (15), so daß der Rasthaken keine zusätzlichen Hebelwirkungen aufnehmen muß.

Fig. 5 stellt eine besonders einfache Ausführung eines Rasthakens (17) dar. Der Rasthaken (17) ragt dabei parallel zum Teleskoprohr (12) durch die Auflageplatte (5) hindurch und ist in dieser drehbar gelagert. Im Bereich seines oberen Stirnendes weist der Rasthaken (17) einen Drehknopf (16a) auf, der mit Griffrillen versehen ist. Der Rasthaken (17) ist daher um seine Drehachse in beiden Richtungen des Doppelpfeiles (18) drehbar. In der arretierten Position greift der Rasthaken (17) in eine entsprechende Rastöffnung in der Mittelkonsole (3) ein. Zum Entriegeln wird in einfacher Weise der Drehknopf (16a) verdreht, bis die Auflageplatte (5) automatisch angehoben wird. In umgekehrter Weise erfolgt dann das erneute Arretieren der Auflageplatte (5) in ihrer Ruheposition.

## Patentansprüche

1. Auflage im Bereich einer Mittelkonsole eines Fahrerhauses für einen Nutzkraftwagen mit einer zwischen einem Fahrersitz und einem Beifahrersitz angeordneten horizontalen Auflageplatte, die zwischen einer versenkten Ruheposition und einer angehobenen Funktionsposition höhenverlagerbar ist,
**dadurch gekennzeichnet,**
daß die Auflageplatte (5) auf einem Hub-Schwenkzylinder (12) angeordnet ist, der an einer Unterseite der Auflageplatte (5) zu ihrem Flächenmittelpunkt exzentrisch angreift und dessen Hub- und Schwenkachse etwa lotrecht zur Auflageplatte (5) ausgerichtet ist.

2. Auflage nach Anspruch 1,
**dadurch gekennzeichnet,**
daß der Hub-Schwenkzylinder Mittel (16, 16a, 17) zum Arretieren der Auflageplatte (5) in ihrer Ruheposition sowie einen Endanschlag für die Funktionsposition aufweist.

3. Auflage nach Anspruch 2,
**dadurch gekennzeichnet,**
daß als Hub-Schwenkzylinder ein Teleskoprohr (12) mit einer in diesem gelagerten Druckfeder (15) vorgesehen ist.

4. Auflage nach einem der vorhergehenden Ansprüche,
**dadurch gekennzeichnet,**
daß die Funktionsposition auf Höhe einer hinter Fahrer- und Beifahrersitz (1, 2) angeordneten Liege (4) vorgesehen ist.

5. Auflage nach einem der vorhergehenden Ansprüche,
**dadurch gekennzeichnet,**
daß auf der Auflageplatte (5) Komfortelemente (9, 10) für Fahrer oder Beifahrer vorgesehen sind.
